# EUROPÄISCHE PATENTSCHRIFT

(11) **EP 4 281 663 B1**
(45) Veröffentlichungstag und Bekanntmachung des Hinweises auf die Patenterteilung: **23.10.2024**
(21) Anmeldenummer: 21809958.8
(22) Anmeldetag: 08.11.2021
(51) Int. Cl.: G10K 11/16, F03B 3/02, F03B 11/04, G10K 11/172

(54) **HYDRAULISCHE MASCHINE VOM TYP FRANCIS**
FRANCIS-TYPE HYDRAULIC MACHINE
MACHINE HYDRAULIQUE DE TYPE FRANCIS

(30) Priorität: 21.01.2021 DE 102021101197
(43) Veröffentlichungstag der Anmeldung: 29.11.2023
(73) Patentinhaber: Voith Patent GmbH, 89522 Heidenheim (DE)
(72) Erfinder: HÜBNER, Björn, 89075 Ulm (DE)
(74) Vertreter: Voith Patent GmbH - Patentabteilung
(86) Internationale Anmeldenummer: PCT/EP2021/080881
(87) Internationale Veröffentlichungsnummer: WO 2022/156929

(56) Entgegenhaltungen:
- EP-A1- 0 039 459
- EP-A1- 3 276 157
- EP-A2- 0 131 833
- JP-U- S58 118 273
- "Hydraulic Machinery and Cavitation", 1 January 1996 (1996-01-01), Dordrecht, pages 855 - 864, XP055846209, ISBN: 978-94-010-9385-9, Retrieved from the Internet <URL:https://infoscience.epfl.ch/record/58861/files/Francis%20Turbine%20Surge%20:%20Discussion%20and%20Data%20Base.pdf> DOI: 10.1007/978-94-010-9385-9_87

## Beschreibung

Die Erfindung betrifft eine hydraulische Maschine mit einem Laufrad vom Typ Francis. Die Erfindung betrifft die Vermeidung von Druckschwankungen, welche beim Betrieb einer solchen hydraulischen Maschine auftreten können. Bei der hydraulischen Maschine kann es sich um eine Turbine oder um eine Pumpe oder um eine Pumpturbine handeln.

Gattungsgemäße hydraulische Maschinen umfassen ein Laufrad und einen Leitapparat. Dabei ist das Laufrad dem rotierenden System und der Leitapparat dem stationären System zugeordnet. Das Laufrad umfasst eine Vielzahl von Laufschaufeln. Bei Turbinen oder Pumpturbinen umfasst der Leitapparat zwei konzentrisch angeordnete Kränze von Leitschaufeln, wobei der innen liegende Kranz beweglich gelagerte Leitschaufeln aufweist und der außen liegende Kranz unbewegliche Leitschaufeln aufweist. Die unbeweglichen Leitschaufeln werden häufig auch Traversen genannt. Bei reinen Pumpen umfasst der Leitapparat nur einen Kranz von unbeweglichen Leitschaufeln. Wenn die hydraulische Maschine durchströmt wird und sich das Laufrad dreht, können durch die gegenseitige Beeinflussung der Umströmung von stationären Leitschaufeln und rotierenden Laufschaufeln (d.h. durch Rotor-Stator-Interaktion) Druckschwankungen auftreten. Die Druckschwankungen treten in der Regel nur mit ausgewählten Frequenzen auf, die sich aus der Drehzahl und der Schaufel-Kombination ergeben. Die Druckschwankungen breiten sich in Richtung Laufrad und Spiralgehäuse, welches sich außen an den Leitapparat anschließt, aus und können dabei durch hydroakustische Resonanzeffekte (d.h. teilweise stehende Wellen) verstärkt werden. Die beschriebenen Druckschwankungen können zu inakzeptabel erhöhten Vibrationen und damit verbundenen Schallemissionen führen, insbesondere wenn sich die Druckschwankungen bis in die Druckrohrleitung ausbreiten.

Im Stand der Technik sind folgende Gegenmaßnahmen bekannt geworden. So offenbart "Teck K. Tee: Noise reduction at Dinorwig power station, HYDRO 01, 2001" einen sogenannten "Hydraulic silencer". Dabei handelt es sich um einen in die Wandung des Spiralgehäuses integrierten Hohlraum, welcher über eine Vielzahl von Öffnungen mit dem Inneren des Spiralgehäuses in Verbindung steht. Im Inneren des Hohlraums ist ein Airbag angeordnet. "Robert Date: The sound of silence, International Water Power & Dam Construction, 1998" offenbart einen am Spiralgehäuse angeordneten Helmholtz-Resonator. Der Resonator besteht aus einer Kammer, welche über einen Rohrstutzen ("nozzle pipe") mit dem Spiralgehäuse verbunden ist. Die Frequenz des Resonators kann mit Hilfe einer beweglichen Hülse ("sleeve") variiert werden, mit welcher die effektive Länge des Rohrstutzens verändert werden kann.

Die EP 0039459 A1 offenbart die Verwendung von mehreren Resonatoren, welche nebeneinander angeordnet sind, wobei jeder Resonator auf eine andere Frequenz abgestimmt ist. Zum Beispiel können der ein Resonator auf die Frequenz der Grundstimmung und die anderen Resonatoren auf Harmonische der Grundschwingungsfrequenz abgestimmt sein.

Die Aufgabe der Erfindung ist es, eine alternative Anordnung anzugeben, mit welcher in gattungsgemäßen hydraulischen Maschinen die beschriebenen Druckschwankungen effektiv reduziert werden können.

Die Aufgabe wird erfindungsgemäß durch eine Ausführung entsprechend dem unabhängigen Anspruch gelöst. Weitere vorteilhafte Ausführungsformen der vorliegenden Erfindung finden sich in den Unteransprüchen.

Im Folgenden wird die Erfindung anhand von Figuren erläutert. Die Figuren zeigen im Einzelnen:
- Fig.1: Gattungsgemäße hydraulische Maschine vom Typ Francis
- Fig.2: Detail einer erfindungsgemäßen hydraulischen Maschine
- Fig. 3: Erfindungsgemäße hydraulische Maschine in einer ersten Ausführungsform
- Fig. 4: Erfindungsgemäße hydraulische Maschine in einer zweiten Ausführungsform
- Fig. 5: Erfindungsgemäße hydraulische Maschine in einer dritten Ausführungsform

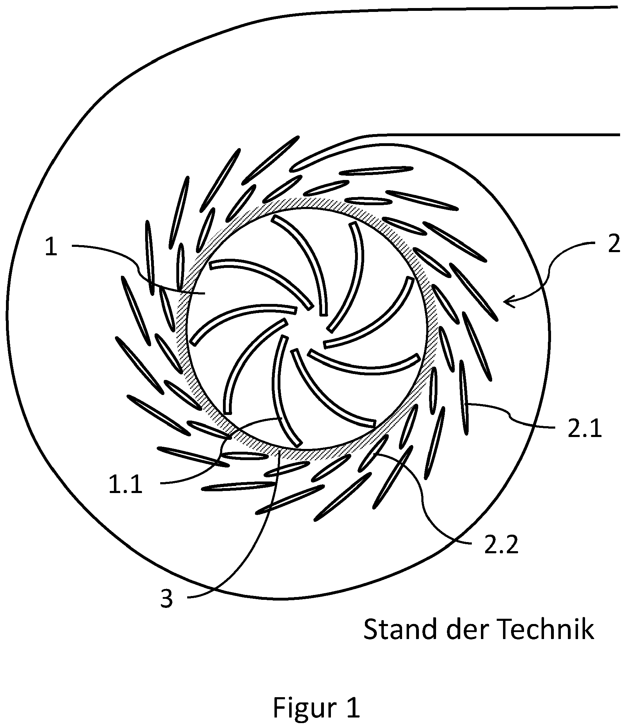

Figur 1 zeigt eine gattungsgemäße hydraulische Maschine vom Typ Francis in schematischer Darstellung. Die hydraulische Maschine umfasst ein Laufrad, welches mit 1 bezeichnet ist und einen Leitapparat, welcher mit 2 bezeichnet ist. Die Blickrichtung der Figur 1 fällt mit der Drehachse des Laufrades zusammen. Das Laufrad 1 umfasst eine Vielzahl von Laufschaufeln, von denen eine mit 1.1 bezeichnet ist. Der Leitapparat 2 umfasst einen Kranz von unbeweglichen Leitschaufeln, von denen eine mit 2.1 bezeichnet ist. Die unbeweglichen Leitschaufeln 2.1 werden oft auch als Traversen bezeichnet. Der Leitapparat 2 umfasst ferner einen Kranz von beweglichen Leitschaufeln, von denen eine mit 2.2 bezeichnet ist. Die in Figur 1 dargestellte Konfiguration mit beweglichen Leitschaufeln 2.2 kommt in der Regel bei Turbinen und Pumpturbinen zum Einsatz. Handelt es sich bei der hydraulischen Maschine um eine reine Pumpe so entfällt der Kranz mit beweglichen Leitschaufeln. 2.2, welcher somit als optional zu betrachten ist. Der Leitapparat 2 umschließt das Laufrad 1 in der in Figur 1 gezeigten Ansicht. Zwischen dem Leitapparat 2 und dem Laufrad erstreckt sich der sogenannte schaufellose Raum, welcher in Figur 1 schraffiert dargestellt und mit 3 bezeichnet ist. Wenn der Leitapparat 2 bewegliche Leitschaufeln 2.2 umfasst, dann wird die äußere Begrenzung des schaufellosen Raumes 3 durch einen Zylindermantel gebildet, welcher die beweglichen Leitschaufeln 2.2 berührt aber nicht schneidet, wenn sie sich in einer Stellung befinden, in welcher sie sich größtmöglich an das Laufrad 1 annähern. Das ist die sogenannte Offenstellung des Leitapparates. Wenn der Leitapparat 2 keine beweglichen Leitschaufeln 2.2 umfasst, dann wird die äußere Begrenzung des schaufellosen Raumes 3 durch einen Zylindermantel gebildet, welcher die unbeweglichen Leitschaufeln 2.1 berührt aber nicht schneidet. Die innere Begrenzung des schaufellosen Raumes 3 wird durch einen Zylindermantel gebildet, welcher das Laufrad 1 berührt aber nicht schneidet. Der schaufellose Raum 3 stellt also im Wesentlichen einen Rohrzylinder dar, wobei sich das Laufrad 1 im Inneren des Rohrzylinders befindet und der Leitapparat 2 sich außerhalb des Rohrzylinders erstreckt.

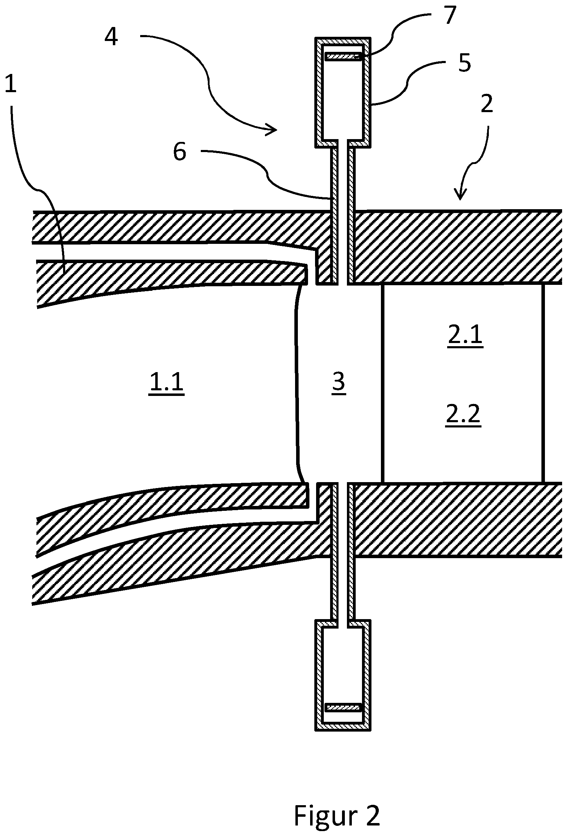

Figur 2 zeigt eine Detailansicht einer erfindungsgemäßen hydraulischen Maschine in schematischer Darstellung. Die Schnittebene von Figur 2 ist parallel zur Drehachse des Laufrades 1 angeordnet. Die Bezeichnungen entsprechen den Bezeichnungen aus Figur 1. Aus Figur 2 geht hervor, dass die axialen Begrenzungen des schaufellosen Raumes 3 durch die Begrenzungen des Wasserweges gegeben sind, welcher es ermöglicht, dass während dem Betrieb der hydraulischen Maschine Wasser dieselbe durchströmen kann. Dabei strömt das Wasser im Turbinenbetrieb vom Leitapparat 2 zum Laufrad 1 hin, und im Pumpenbetrieb in umgekehrter Richtung. Eine erfindungsgemäße hydraulische Maschine umfasst Resonatoren zur Unterdrückung von Druckschwankungen, von denen in Figur 2 einer mit 4 bezeichnet ist. Jeder Resonator 4 umfasst dabei eine Kammer, welche mit 5 bezeichnet ist, und einen Rohrstutzen, welcher mit 6 bezeichnet ist. Der Rohrstutzen 6 ist mit der Kammer 5 verbunden und so angeordnet, dass das von der Kammer 4 abgewandte Ende des Rohrstutzens 6 im schaufellosen Raum 3 in den Wasserweg mündet. Dadurch wird sichergestellt, dass während dem Betrieb der hydraulischen Maschine die Kammern 5 der Resonatoren 4 mit Wasser gefüllt und über die Rohrstutzen 6 mit dem Wasserweg verbunden sind. D.h. auch die Rohrstutzen 6 sind so mit Wasser gefüllt.

Die Resonatoren 4 sind so auszulegen, dass sie die unerwünschten Druckschwankungen unterdrücken können. Dazu sind die Innenabmessungen der Kammern 5 und Rohrstutzen 6 so zu wählen, dass die hydroakustische Resonanzfrequenz der Resonatoren 4 in der Nähe der Frequenz liegt, mit der die unerwünschten Druckschwankungen auftreten. Da die Druckschwankungen durch die Rotor-Stator-Interaktion verursacht werden, kann es sich dabei je nach Anwendung und Schaufelkombination (d.h. Anzahl von Lauf- und Leitschaufeln) um die erste, zweite oder dritte Harmonische der Laufschaufel-Passierfrequenz handeln. Da eine ausreichend genaue rechnerische Vorhersage der Resonator-Eigenschaften oft nicht möglich ist und auch Temperaturschwankungen einen nicht unerheblichen Einfluss haben können, ist es von Vorteil, wenn die Resonatoren 4 eine Verstelleinrichtung aufweisen, welche sowohl eine anfängliche Abstimmung als auch eine Nachjustierung der Resonanzfrequenz der Resonatoren 4 im laufenden Betrieb ermöglichen. Hierzu ist vorgesehen, in den Kammern 5 einen verstellbaren Stempel anzuordnen, dessen Position z.B. mittels Spindel oder einer anderen Einrichtung genau angepasst werden kann. In Figur 2 ist einer der Stempel mit 7 bezeichnet. Durch eine Verstellung der Stempel 7 kann so das wirksame Kammervolumen und damit die Resonanzfrequenz der betreffenden Resonatoren 4 eingestellt werden. Die Wandstärken der aus Stahl zu fertigenden Resonatoren 4 sind so zu wählen, dass die je nach Anwendungsfall teilweise sehr hohen statischen Drücke und dynamischen Druckschwankungen sicher aufgenommen werden können.

Die Resonatoren 4 können an beiden Seiten des Wasserweges angeordnet sein. In Figur 2 ist einer der Resonatoren 4 an der oberen Seite, und ein weiterer Resonator 4 an der unteren Seite angeordnet. Es könnten genauso gut alle Resonatoren 4 oben oder alle Resonatoren unten angeordnet sein. Figur 2 zeigt eine hydraulische Maschine mit vertikaler Drehachse. Bei hydraulischen Maschinen mit horizontaler Drehachse wäre die in Figur 2 dargestellte Anordnung um 90° gedreht. Bei hydraulischen Maschinen mit einem Leitapparat mit beweglichen Leitschaufeln 2.2 ist eine der Seiten des Wasserweges durch den Verstellmechanismus für die beweglichen Leitschaufeln 2.2 stark in Beschlag genommen, so dass es dann meist von Vorteil ist, wenn alle Resonatoren 4 auf der gegenüberliegenden Seite des Wasserweges angeordnet werden.

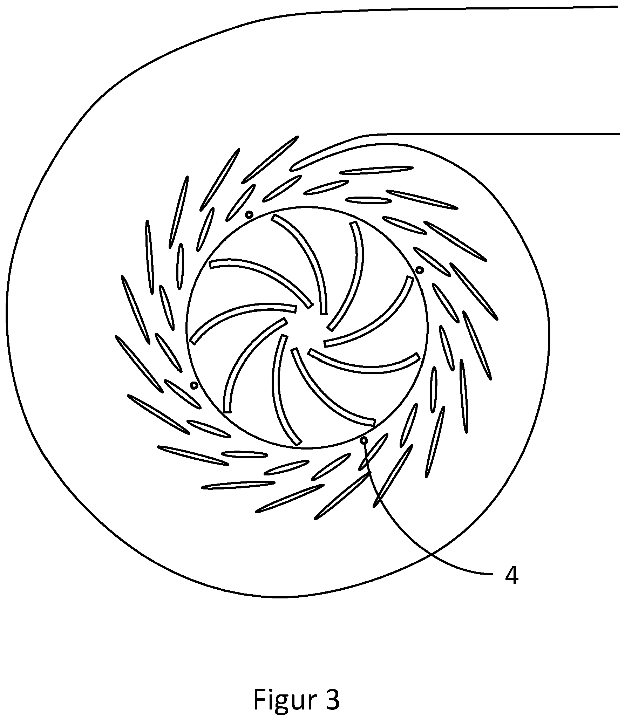

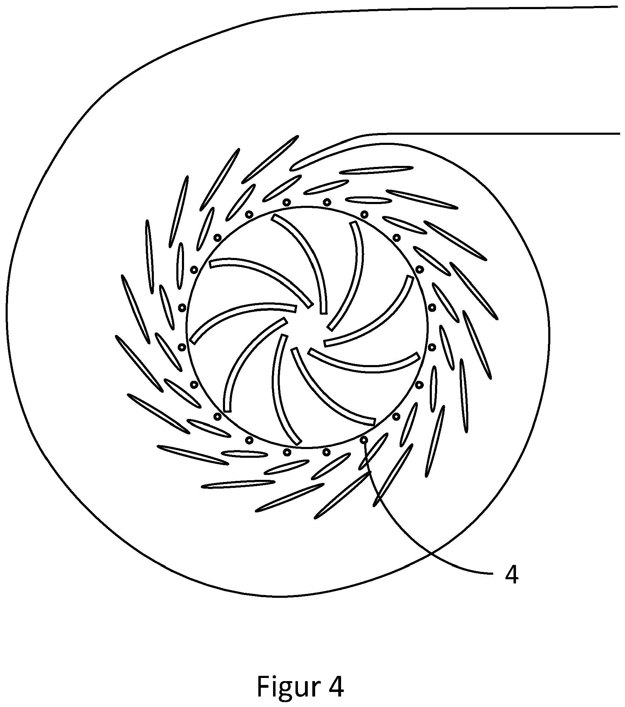

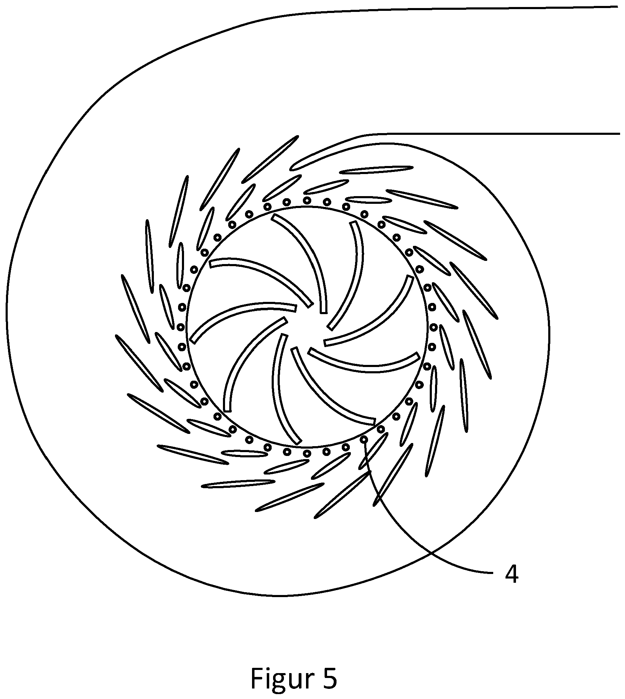

Figur 3 zeigt eine erfindungsgemäße hydraulische Maschine mit einer Anordnung von Resonatoren 4 in einer ersten Ausführungsform. Die hydraulische Maschine umfasst vier Resonatoren 4, welche so im schaufellosen Raum angeordnet sind, dass sie die Ausbreitung von Vibrationen in allen Richtungen um das Laufrad herum verhindern können. Dazu sind die Resonatoren 4 in umfänglicher Richtung um das Laufrad herum in gleichmäßigen Abständen angeordnet. Die in Figur 4 dargestellte hydraulische Maschine umfasst 20 bewegliche Leitschaufeln. Die Resonatoren 4 sind so verteilt, dass je ein Resonator 4 an jeder fünften Leitschaufel angeordnet ist. Dabei sind die Resonatoren 4 in etwa zentral, d.h. mittig in Bezug auf das Profil der zugehörigen Leitschaufel angeordnet. Genauso gut könnten sie mehr in Richtung desjenigen Endes der zugehörigen Leitschaufel angeordnet sein, welches näher am Laufrad angeordnet ist. Genauso gut könnten sie mehr in Richtung desjenigen Endes der zugehörigen Leitschaufel angeordnet sein, welches weiter entfernt zum Laufrad angeordnet ist. Eine weitere gleichmäßige Verteilung von Resonatoren 4 ergibt sich im Beispiel der gezeigten hydraulischen Maschine, wenn insgesamt fünf Resonatoren 4 verwendet werden, wobei je ein Resonator 4 an jeder vierten Leitschaufel angeordnet wird. Eine weitere gleichmäßige Verteilung von Resonatoren 4 ergibt sich im Beispiel der gezeigten hydraulischen Maschine, wenn insgesamt zehn Resonatoren 4 verwendet werden, wobei je ein Resonator 4 an jeder zweiten Leitschaufel angeordnet wird. Eine weitere gleichmäßige Verteilung von Resonatoren 4 ergibt sich im Beispiel der gezeigten hydraulischen Maschine, wenn insgesamt zwanzig Resonatoren 4 verwendet werden, wobei je ein Resonator 4 an jeder Leitschaufel angeordnet wird. Diese Anordnung ist in Figur 4 dargestellt. Eine weitere gleichmäßige Verteilung von Resonatoren 4 ergibt sich im Beispiel der gezeigten hydraulischen Maschine, wenn insgesamt vierzig Resonatoren 4 verwendet werden, wobei je zwei Resonatoren 4 an jeder Leitschaufel angeordnet werden. Diese Anordnung ist in Figur 5 dargestellt.

Aus den im vorhergehenden Abschnitt dargelegten Ausführungsbeispielen kann der Fachmann unschwer für jede beliebige hydraulische Maschine (d.h. für jede beliebige Anzahl von Leitschaufeln 2.1 oder 2.2) eine geeignete gleichmäßige Verteilung von Resonatoren 4 ableiten. Wie bereits erwähnt kann dabei die absolute azimutale Ausrichtung der Anordnung der Resonatoren 4 in Bezug auf die benachbarten Leitschaufeln beliebig gewählt werden.

Eine weitere mögliche Ableitung von gleichmäßig um das Laufrad herum verteilten Resonatoren 4 ergibt sich dadurch, dass von der Anzahl der Laufschaufeln 1.1 ausgegangen wird. Die in den Figuren 3 - 5 dargestellte hydraulische Maschine umfasst neun Laufschaufeln 1.1. So könnten beispielsweise drei, neun oder achtzehn Resonatoren gleichmäßig um das Laufrad herum angeordnet werden. Auch hier spielt die azimutale Ausrichtung keine Rolle.

Die Verwendung einer gleichmäßigen Verteilung von Resonatoren 4 um das Laufrad herum ist jedoch nicht auf die Ableitung aus der Anzahl der Leit- oder Laufschaufeln beschränkt. So könnte beispielsweise eine Anordnung gewählt werden, welche sieben, acht, elf, dreizehn, usw. Resonatoren 4 umfasst. Auch hier spielt die azimutale Ausrichtung keine Rolle.

Erfindungsgemäß sind alle Resonatoren 4 auf ein und dieselbe Resonanzfrequenz eingestellt.

Die Untersuchungen des Erfinders haben ergeben, dass eine höhere Anzahl von Resonatoren 4 auch eine bessere Unterdrückung von Vibrationen ermöglicht. Außerdem waren in dieser Hinsicht die Anordnungen besonders vorteilhaft, welche sich bei der Ableitung der Anzahl der Resonatoren 4 an der Anzahl der Leitschaufeln orientieren. Im Sinne der Ökonomie wird der Fachmann bestrebt sein, mit möglichst wenigen Resonatoren 4 auszukommen, um die Vibrationen in ausreichendem Ausmaß zu dämpfen. Der Fachmann wird die hierzu notwendige Anzahl und Anordnung von Resonatoren 4 im Rahmen der technischen Lehre dieser Anmeldung mit Hilfe von hydro-akustischen Simulationsrechnungen bestimmen.

Abschließend sei erwähnt, dass die technische Lehre dieser Anmeldung selbstverständlich auch dazu geeignet ist, bereits bestehende hydraulische Maschinen mit entsprechend angeordneten Resonatoren 4 nachzurüsten, um das Vibrationsverhalten dieser Maschinen zu verbessern.

### Bezugszeichenliste

- 1: Laufrad
- 1.1: Laufschaufel
- 2: Leitapparat
- 2.1: Unbewegliche Leitschaufel (Traverse)
- 2.2: Bewegliche Leitschaufel
- 3: Schaufelloser Raum
- 4: Resonator
- 5: Kammer
- 6: Rohrstutzen
- 7: Stempel
- 8: Spiralgehäuse
- 9: Druckrohrleitung

## Patentansprüche

1. Hydraulische Maschine umfassend ein Laufrad (1) und einen Leitapparat (2), wobei das Laufrad (1) eine Vielzahl von Laufschaufeln (1.1) und der Leitapparat (2) wenigstens einen Kranz von Leitschaufeln (2.1, 2.2) umfasst, und wobei sich zwischen dem Laufrad (1) und dem Leitapparat (2) ein schaufelloser Raum (3) erstreckt, wobei die hydraulische Maschine mehrere Resonatoren (4) zur Unterdrückung von Druckschwankungen, welche beim Betrieb der hydraulischen Maschine auftreten können, umfasst, und wobei jeder Resonator (4) eine Kammer (5) umfasst, und wobei die Resonatoren (4) so ausgelegt sind, dass sie die während dem Betrieb der hydraulischen Maschine auftretenden Druckschwankungen unterdrücken können, **dadurch gekennzeichnet, dass** jeder Resonator (4) einen Rohrstutzen (6) umfasst, und wobei jeweils der Rohrstutzen (6) mit der zugehörigen Kammer (5) verbunden ist, und wobei jeweils das von der Kammer (5) abgewandte Ende des Rohrstutzens (6) im schaufellosen Raum (3) mündet, und wobei die Anzahl der Resonatoren wenigstens drei ist, und wobei die Resonatoren (4) in umfänglicher Richtung um das Laufrad (1) herum in gleichmäßigen Abständen angeordnet sind, und wobei alle Resonatoren (4) auf ein und dieselbe Resonanzfrequenz eingestellt sind, und wobei die hydraulische Maschine vom Typ Francis ist.

2. Hydraulische Maschine nach Anspruch 1, wobei in der Kammern (5) jeweils ein verstellbarer Stempel (7) angeordnet ist, welcher so ausgebildet ist, dass durch eine Positionsveränderung des Stempels (7) das wirksame Volumen der betreffenden Kammer (5) verändert werden kann, um die Resonanzfrequenz des betreffenden Resonators (4) einzustellen.

3. Hydraulische Maschine nach Anspruch 1 oder 2, wobei die Anzahl der Resonatoren (4) dadurch bestimmt wird, dass die Anzahl der Resonatoren (4) multipliziert mit einer natürlichen Zahl die Anzahl der Leitschaufeln (2.1, 2.2) ergibt.

4. Hydraulische Maschine nach Anspruch 1 oder 2, wobei die Anzahl der Resonatoren (4) dadurch bestimmt wird, dass die Anzahl der Leitschaufeln (2.1, 2.2) multipliziert mit einer natürlichen Zahl die Anzahl der Resonatoren (4) ergibt.

5. Hydraulische Maschine nach einem der vorherigen Ansprüche, wobei der Leitapparat (2) einen Kranz von unbeweglichen Leitschaufeln (2.1) umfasst.

6. Hydraulische Maschine nach einem der vorherigen Ansprüche, wobei der Leitapparat (2) einen Kranz von beweglichen Leitschaufeln (2.2) umfasst.

## Claims

1. A hydraulic machine comprising an impeller (1) and a guide apparatus (2), wherein the impeller (1) comprises a plurality of impeller blades (1.1) and the guide apparatus (2) comprises at least one ring of guide vanes (2.1, 2.2), and wherein a vane-less space (3) extends between the impeller (1) and the guide apparatus (2), wherein the hydraulic machine comprises a plurality of resonators (4) for suppressing pressure fluctuations which may occur during operation of the hydraulic machine, and wherein each resonator (4) comprises a chamber (5), and wherein the resonators (4) are designed such that they can suppress the pressure fluctuations occurring during operation of the hydraulic machine, **characterised in that** each resonator (4) comprises a pipe socket (6), and in each case the pipe socket (6) is connected to the associated chamber (5), and in each case the end of the pipe socket (6) facing away from the chamber (5) opens into the bladeless space (3), and in which the number of resonators is at least three, and wherein the resonators (4) are arranged in a circumferential direction around the impeller (1) at uniform intervals, and wherein all resonators (4) are set to one and the same resonant frequency, and wherein the hydraulic machine is of the Francis type.

2. Hydraulic machine according to claim 1, wherein an adjustable plunger (7) is arranged in each of the chambers (5), which is designed in such a way that the effective volume of the relevant chamber (5) can be changed by changing the position of the plunger (7) in order to adjust the resonant frequency of the relevant resonator (4).

3. Hydraulic machine according to claim 1 or 2, wherein the number of resonators (4) is determined by multiplying the number of resonators (4) by a natural number to give the number of guide vanes (2.1, 2.2).

4. Hydraulic machine according to claim 1 or 2, wherein the number of resonators (4) is determined by multiplying the number of guide vanes (2.1, 2.2) by a natural number to give the number of resonators (4).

5. Hydraulic machine according to any one of the preceding claims, wherein the guide apparatus (2) comprises a ring of immovable guide vanes (2.1).

6. Hydraulic machine according to one of the preceding claims, wherein the guide apparatus (2) comprises a ring of movable guide vanes (2.2).

## Revendications

1. Machine hydraulique comprenant un rotor (1) et un distributeur (2), le rotor (1) comprenant une pluralité d'aubes mobiles (1.1) et le distributeur (2) comprenant au moins une couronne d'aubes directrices (2.1, 2.2), et dans lequel un espace sans aubes (3) s'étend entre la roue (1) et le distributeur (2), dans lequel la machine hydraulique comprend une pluralité de résonateurs (4) pour supprimer les variations de pression qui peuvent se produire pendant le fonctionnement de la machine hydraulique, et dans lequel chaque résonateur (4) comprend une chambre (5), et dans lequel les résonateurs (4) sont conçus pour supprimer les variations de pression qui se produisent pendant le fonctionnement de la machine hydraulique, **caractérisé en ce que** chaque résonateur (4) comprend une tubulure (6), et dans lequel chaque tubulure (6) est reliée à la chambre (5) correspondante, et dans lequel chaque extrémité de la tubulure (6) opposée à la chambre (5) débouche dans l'espace sans aubes (3), et dans lequel le nombre de résonateurs est d'au moins trois, et dans lequel les résonateurs (4) sont disposés à intervalles réguliers dans la direction circonférentielle autour de la roue (1), et dans lequel tous les résonateurs (4) sont réglés sur une seule et même fréquence de résonance, et dans lequel la machine hydraulique est du type Francis.

2. Machine hydraulique selon la revendication 1, dans laquelle un poinçon réglable (7) est disposé dans chacune des chambres (5), lequel est conçu de telle sorte qu'un changement de position du poinçon (7) permet de modifier le volume efficace de la chambre (5) concernée afin d'ajuster la fréquence de résonance du résonateur (4) concerné.

3. Machine hydraulique selon la revendication 1 ou 2, dans laquelle le nombre de résonateurs (4) est déterminé par le fait que le nombre de résonateurs (4) multiplié par un nombre naturel donne le nombre d'aubes directrices (2.1, 2.2).

4. Machine hydraulique selon la revendication 1 ou 2, dans laquelle le nombre de résonateurs (4) est déterminé par le fait que le nombre d'aubes directrices (2.1, 2.2) multiplié par un nombre naturel donne le nombre de résonateurs (4).

5. Machine hydraulique selon l'une quelconque des revendications précédentes, dans laquelle le distributeur (2) comprend une couronne d'aubes directrices immobiles (2.1).

6. Machine hydraulique selon l'une quelconque des revendications précédentes, dans laquelle le distributeur (2) comprend une couronne d'aubes directrices mobiles (2.2).
